# EUROPEAN PATENT APPLICATION

(11) **EP 1 686 463 A1**
(43) Date of publication of application: **02.08.2006**
(21) Application number: 05250469.3
(22) Date of filing: 28.01.2005
(51) Int. Cl.: G06F 9/44, G06F 17/20

(54) **Difference generation method and apparatus**

(71) Applicant: MATSUSHITA ELECTRIC INDUSTRIAL CO., LTD., Kadoma-shi, Osaka 571-8501 (JP)
(72) Inventor: Jones, Nicholas John, c/o Panasonic Mobile Com., Wokingham Berkshire RG40 2AQ (GB); English, David, c/o Panasonic Mobile Communication, Wokingham Berkshire RG40 2AQ (GB)
(74) Representative: Haley, Stephen

(57) **Abstract**

A method of generating a first difference data group from a first data group and a second data group. The first difference data group generates, in a programmable device, the second data group when applied to the first data group and the first data group when applied to the second data group. The method comprises the step of comparing the second data group with the first data group to generate a first difference data subgroup comprising first difference data items and a remainder data group, and comparing the remainder data group with the second data group to generate a second difference data subgroup comprising second difference data items. At least some of the second difference data items are compared with at least some of the first difference data items to generate a third difference data subgroup comprising third difference data items. At least some of the third difference data items comprise a combination of a first difference data item and a second difference data item and the first and second difference data items comprised in third difference data items are removed from the first and second difference data subgroups respectively to form reduced first and second difference data subgroups, the reduced first difference data subgroup and the third difference data subgroup together defining a first source-to-target difference data group and the reduced second difference group defining a first target-to-source difference data group.

The first source-to-target difference data group and the first target-to-source difference data group are output to define the first difference data group.

## Description

The present invention relates to an improved difference generation method which may be used as part of a reliable software update mechanism, for example in software version control and in electronic devices such as mobile phones.

In many cases it is possible to update the software on a device by "patching" the software. Patching software typically involves manipulating the current version of software installed on the device and incorporating into this software the contents of a list of changes and additions to the current version of the software. A new version of the software is generated that is then stored in the place of the current version of the software.

Typically the transmission medium used to transfer "patch data" or an "update package" to the device is a limited resource in terms of bandwidth and cost. Transmitting just the differences between versions and performing additional calculations on the device instead of transmitting the entire new version reduces the size and time required to transfer the "patch" data to the device.

The current state of the art difference generation systems are typically examples or improvements of methods to solve the "string-to-string correction problem" as exemplified by Walter Tichy in ACM Transactions on Computer Systems Vol. 2, No. 4, November 1984, Pages 309-321. In Tichy's solution a target string can be generated using a set of instructions. The instructions consist of a sequence of "copy" commands and "add" commands. The copy commands refer to a subset of some source string, and the add commands add new data that does not appear in the source string. Typically the source string or data set is one version of a file, and the target string is a later version of the same file. To move from V1.0 to V2.0 of some data set there is a particular difference file containing the copy and add commands necessary for the conversion.

A problem with this approach is that because the aggregate of the copy commands does not cover all of the information contained in the source string, the difference generation process loses some information about the original V1.0. Therefore if a flaw is revealed after the modification from V1.0 to V2.0 is distributed which means that all units should revert from V2.0 to V1.0, an additional difference file (the particularone for V2.0 to V1.0) also needs to be transmitted to all devices.

Furthermore if a problem occurs during the process of modifying V1.0 of a file to make V2.0 that makes it impossible to complete the modification and part of V1.0 has already been overwritten, it is not possible to return to the original V1.0. Devices do not normally work with an arbitrary split of part old and part new software.

Another area suffering problems because of the deficiencies in state of the art difference generation is systems that frequently change their configuration between a small (fixed) selection of options, for example a software defined radio system that can switch between GSM, UMTS and Wireless LAN. Typically in these systems each configuration is stored in its entirety then swapped in as required. This places a relatively large storage requirement. Conventional difference systems cannot be used to reduce the storage requirement, again because they can only transform one way.

The present invention provides a method of difference generation that enables the same difference data to be used for both the installation and uninstallation of a change.

According to the present invention there is provided a method of generating a first difference data group from a first data group and a second data group, the first difference data group generating the second data group when applied to the first data group and the first data group when applied to the second data group, the method comprising the steps of:
comparing the second data group with the first data group to generate a first difference data subgroup comprising first difference data items and a remainder data group;
comparing the remainder data group with the second data group to generate a second difference data subgroup comprising second difference data items;
comparing at least some of the second difference data items with at least some of the first difference data items to generate a third difference data subgroup comprising third difference data items, wherein at least some of the third difference data items comprise a combination of a first difference data item and a second difference data item and the first and second difference data items comprised in third difference data items are removed from the first and second difference data subgroups respectively to form reduced first and second difference data subgroups, the reduced first difference data subgroup and the third difference data subgroup together defining a first source-to-target difference data group and the reduced second difference group defining a first target-to-source difference data group;
outputting the first source-to-target difference data group and the first target-to-source difference data group to define the first difference data group, which, when applied to the first data group generates the second data group and when applied to the second data group generates the first data group.

According to the present invention there is further provided a method of generating a second data group from a first data group, in a programmable device, the method comprising the steps of:
inputting a source-to-target data group or a first difference data group generated as described above;
applying the source-to-target data group or first difference data group to the first data group to generate the second data group; and
outputting the second data group.

According to the present invention there is further provided a method of generating a first data group from a second data group, in a programmable device, the method comprising the steps of:
inputting a first difference data group generated as described above;
applying the first difference data group to the second data group to generate the first data group; and
outputting the first data group.

According to the present invention there is further provided a difference data generating system for generating a first difference data group from a first data group and a second data group, the first difference data group generating the second data group when applied to the first data group and the first data group when applied to the second data group, the system comprising:
a first difference data generator arranged to compare, in use, a second data group with the first data group to generate a first difference data subgroup comprising first difference data items and a remainder data group;
a second difference data generator arranged to compare, in use, the remainder data group with the second data group to generate a second difference data subgroup comprising second difference data items;
a difference data combiner arranged to compare, in use, at least some of the second difference data items with at least some of the first difference data items to generate a third difference data subgroup comprising third difference data items, wherein each third difference data item comprises a combination of a first difference data item and a second difference data item;
means for removing the first and second difference data items comprised in third difference data items from the first and second difference data subgroups respectively to form reduced first and second difference data subgroups, the reduced first difference data subgroup and the third difference data subgroup together defining a first source-to-target difference data group and the reduced second difference group defining a first target-to-source difference data group;
output means arranged to output, in use, the first source-to-target difference data group and the first target-to-source difference data group to define a difference data group, which, when applied to the first data group generates the second data group and when applied to the second data group generates the first data group.

According to the present invention there is further provided a programmable device comprising:
input means arranged to input, in use, a difference data group or a source-to target difference data group generated as described above;
means for applying the first difference data group or the source-to-target difference data group to the first data group to generate the second data group; and
output means arranged to output, in use, the second data group

According to the present invention there is further provided a programmable device comprising:
input means arranged to input, in use, a difference data group generated as described above;
means for applying the difference data group to the second data group to generate the first data group; and
output means arranged to output, in use, the first data group.

The data groups may be different versions of files or data sets, in which case they may be operating instructions, an operating program or an operating system. The data groups may also be different configurations.

The key feature of the present invention is that the difference generation method is reversible: the original version and generated differences can be combined to produce the new version AND the new version and the differences can be combined to produce the original version.

Examples of the present invention will now be described with reference to the accompanying drawings, in which:
Figure 1 shows a standard Tichy difference algorithm;
Figure 2 shows an enhanced coverage difference algorithm;
Figure 3 shows adding symbols;
Figure 4 shows the results of stage 1 of an example difference generation method according to the present invention;
Figure 5 shows stage 2 of a first example difference generation method according to the present invention;
Figure 6 shows stage 2 of a second example difference generation method according to the present invention;
Figure 7 shows a difference file instruction sequence according to an example difference generation method according to the present invention; and
Figure 8 shows reconstructing a source string according to an example difference generation method according to the present invention.

The present invention may be used in any system or program that needs or benefits from access to multiple versions of some data and where it is important to minimise data storage and transmission requirements but minimising calculation time is not necessary. This typically covers any communications or storage constrained device where sub-second processing delays are imperceptible to the user.

The present invention places no additional requirements on a system above those needed for conventional update systems. For example, a device according to an example of the present invention a processor (such as a CPU) has a processor to execute a programme containing instructions for applying difference data generated according to the present invention to perform an update. This device has memory from which to run the update package, storage (typically non-volatile) which holds the data group to be updated and storage (preferably non-volatile) which holds the update package. The storage device may be flash memory or a hard disc, or other storage that allows the processor to write to the storage device as well as read from it.

To provide the update package to the device, Bluetooth, GSM or UMTS may be used, for example in a device such as a mobile phone. Other broadcast type air interfaces such as DVB and DAB are possible. Alternatively a wired communication interface such as a serial cable, USB cable, IEEE1394 or power-line communications through a power cable may be used. It is also possible for tangible media such as CDS, DVDs, floppy disks, smart cards, digital video tape or flash memory to be used to provide the update package.

Examples of electronic devices which could use the present invention are: televisions, DVD players, video recorders, CD players, set-top boxes, digital cameras, digital video cameras, digital radios, printers, microwave ovens and fridge-freezers.

The tools used by the difference generation method of the present invention will firstly be described using some simple examples and then an example difference generation method will be described with reference to a more complicated example.

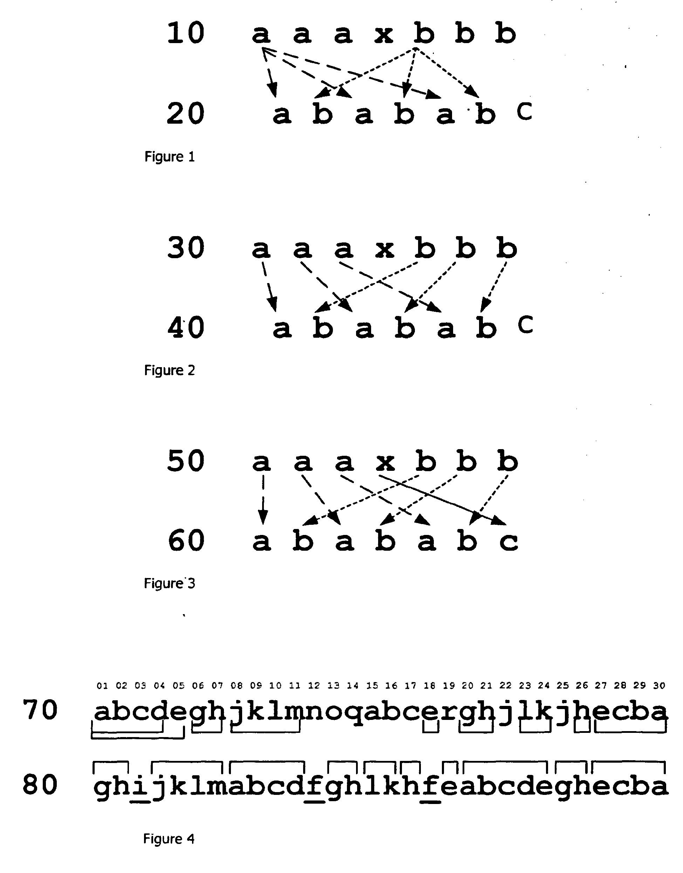

The difference information provided by a standard string-to-string correction algorithm is illustrated in Figure 1. In this figure there is a source string 10 and a target string 20. The source string may be part of a current file version or configuration, for example, and the target string part of a new file version or configuration. To make each instance of 'a' in the target string 20 the symbol 'a' is copied from the first location in the source string 10. Each of these copy operations is shown as a dashed arrow on the diagram. To make each instance of 'b' in the target string it is copied from the fifth location (i.e. the first matching symbol) in the source string. Each 'b' copy instruction is shown as a dotted line on the diagram. Using this algorithm there is no information about the second and third 'a' and 'b' in the source string.

In a conventional difference generation a symbol in the target string, for example 'c' in Figure 1, that does not appear in the source string is included in the difference data as an "add" instruction. From Figure 1 there would be no information retained about the symbol 'x' in the source string 10.

The algorithm used in the present invention tracks which parts of a source string have been used in previous "copy" commands so as not to copy the same symbol twice where possible. When choosing between two otherwise equivalent source sub-strings, the source sub-string that will provide the greater usage of the different symbols in the source string is preferred. A simple case is shown in figure 2.

The situation shown in figure 2 illustrates how using previously unused symbols in the source string may increase coverage of the source string; i.e. more of the source string is referred to in the difference data and could hence be recreated just from the difference data. When compared to figure 1 all of the 'a's and 'b's in the source are now used when creating the target.

An extension of the system to improve coverage of symbols in the source string is to retain a data store about each sub-string used. A person skilled in the art will appreciate that various search techniques are possible to determine, from information held in the data stores and the many possible configurations, the configuration which will maximise the coverage achieved using copy commands and minimise the number of instructions in the difference data.

To overcome the deficiencies of state of the art systems which lose information about symbols which appear in the source string but not the target string, for example the 'x' in figure 1, the "add" command (to add the 'c' in figure 1) can be replaced with an "XOR" command. Therefore for figure 1 the transmitted data would be the exclusive-or of 'x' and 'c'. See figure 3.

The exclusive-or, e, transformation has the characteristic that, for arbitrary A and B that are the same size and format:

| | | |
|---|---|---|
| if | A ⊕ B = C | (i.e. generate the difference between A and B) |
| Then | A ⊕ C = B | (i.e. XOR the difference with the old to create the new) |
| And | B ⊕ C = A | (i.e. XOR the difference with the new to create the old) |

In the system of the present invention note that the location of the source is not chosen at random to encrypt data ('c') that would have needed 'add' commands, but is chosen to maximise coverage of the source string by using a location in the source ('x') that hasn't been used in a previous copy. This has the result that increased security is provided by not sending "add" data in undisguised form. Instead, the extensive use of 'XOR' commands hides the actual data contents.

There is a further security benefit in that, due to the increased coverage of the source string; an attacker would need to have access to a correspondingly higher proportion of the source string if they are to be able to reconstruct the entire target accurately.

Figure 4 illustrates how the standard algorithm, taking 70 as the source string and 80 as the target string, can almost completely generate the target string 80 by "copy" operations from the source string 70. The source and destination locations in the strings are shown in figure 4 by the bars below and above the symbol strings. The exceptions are the underlined 'i' and 'f' symbols in 80, which would need to be included in the difference data as "add" commands. There are also a number of characters that are not covered in the source string (un-bracketed, 'noqabc, r, j, j'). For these characters to be covered in the difference data a further step is necessary.

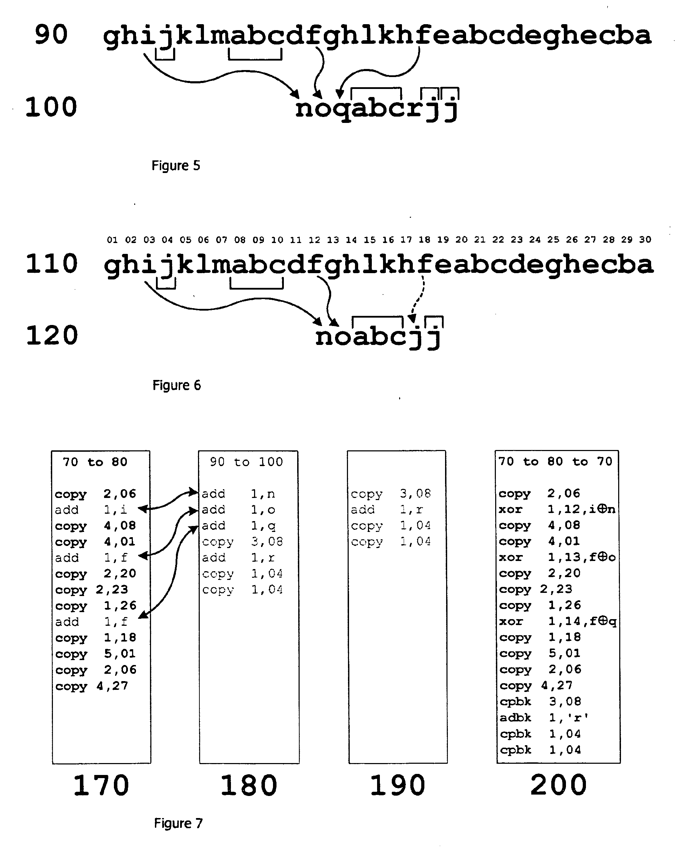

A convenient method to increase the coverage of the source string, shown in figure 5, is to reuse the difference algorithm, this time using the target string 90 as the 'source', and the moved 'remainder' string 100 as the target. The moved remainder string is composed of all symbols in the source string that were not referenced by data generated in the first difference generation pass. This second pass results in a further set of operations that would be required to reconstruct the source.

A comparison can be made between the add destinations in string 80 and the add destinations in string 100. Identically sized symbols can then be combined using an XOR command. Using XOR commands in this way increases the coverage of the source string in this example to 100%.

Figure 6 shows a slightly different version of the second algorithm pass to illustrate how the system works when there is more data in the first pass that needs to be included with an Add command than there is in the second pass. This is a typical occurrence when producing a new version of a file, since typically later versions have more functionality (and are larger) than earlier versions.

In figure 6 string 110 is the same as string 90 in the previous example, however the remainder string 120 has been reduced in size by two characters when compared to string 100 in the previous example. Using the normal difference algorithm, string 120 would be created as two add commands for the characters n and o, then copy commands for the remaining abc, j and j. Comparing this difference data to that required to generate string 110 there is a difference in the number of add commands required; there are more add symbols in 110 (i, f, f) than in 120 (n, o). The best way to minimise the size of the difference data is to combine an add destination in 110 with a copy destination in 120. i.e. rather than combining two pieces of add data in an XOR command, one piece of add data is combined with a copy address, shown using the dotted arrow.

Figure 7 shows the difference information that is generated during each pass of the difference algorithm. When calculating the differences from 70 to 80 the left-hand column of instructions 170 are generated. Using the left-hand column 170 as an example, the left-hand column of instructions, when combined with the source string 70, enables the creation of the target string 80.

The left-hand column is interpreted in the target string construction method as:
a) Copy 2 symbols from address 06 in the source 70, then
b) Add 1 symbol with value "i", then
c) Copy 4 symbols from address 08 in the source 70, then
d) Copy 4 symbols from address 01 in the source 70, then
Etc.

The instructions are performed sequentially, to build the target string starting with its first symbol; subsequent symbols are appended to the target according to the instructions.

The second column 180 in figure 7 shows the instructions needed to generate the "remainder" string 100 using the target string 90 as source.

Comparison of the add instructions in the first and second columns (shown connected by arrows) allows the coverage of the source string 70 to be increased by replacing the add instructions with XOR instructions as shown in the right-hand column.

The increased coverage of the source string 70 reduces the number of symbols in the remainder string such that the instructions 190 necessary to generate the remainder string from the target string 90 become those shown in the third column 190 of figure 7.

This additional information is appended to 170 to give the complete right-hand column of instructions 200. Note also that the copy instruction of the third column becomes a "cpbk" (or copy back) instruction to indicate that this instruction is part of a reversion system, and is not required when initially generating the target string from the source string. Similarly the add instruction in the third column becomes an "adbk" (or add back) instruction. The usage of these instructions is shown below. The term 'difference data' comprises all instructions such as copy, xor, addback and copyback instructions.

It is expected that the additional "target-to-source" information (the copy-backs and add-backs) would be appended to the normal source-to-target information and delivered together. However this joint delivery is not required. The target-to-source information could be delivered separately from the original source-to-target information and then used in conjunction with the source-to-target information to effect a reversion from target version to the source version.

Constructing the original string from the new string and the difference data requires two parses over the difference data. The first parse marks the sections of the original string covered by the difference data. This is necessary, since the second part of the difference data, the copy back and add back instructions, have their addresses based on the un-covered parts of the original string. By marking which parts of the original string are covered, it is possible to fill in the un-covered parts with data copied back from the new string.

The second parse then uses the copy and XOR instructions to fill in the marked parts of the original string.

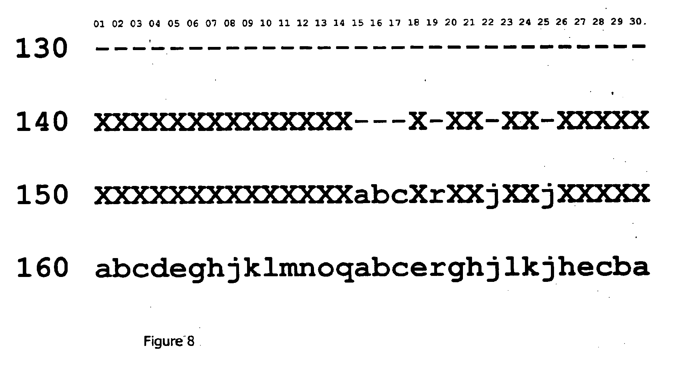

The algorithm to restore the original string is illustrated in figure 8 using the example instructions from figures 4, 5 and 7 . The algorithm is:
a) Set the entire contents of an area of memory 130 in which to reconstruct the original to a known value (shown as '-')
b) Process all the copy and XOR instructions (not copy-back or add-back), but instead of storing the actual values to the memory, store a marker value (shown as 'X') to memory different from the cleared value. The actual values are not stored at this point in case either the original or marker value appears in the real data and hence lead to confusion. The final state once the instructions have been completed is shown as 140.
c) Store the values contained in the copy-back and add-back instructions. We know where to store these, as the (implied) address in the instructions refers to the distance along the unmarked areas of memory. The final state once the values have been stored is shown as 150.
d) Go through the copy and XOR instructions again, this time storing the actual data values to memory. This overwrites all the marked locations with the correct values. The final state once all overwrites have been performed is shown as 160. (The memory locations used for writing in this stage are taken from the difference data).

The original has now been constructed.

The size of the difference data created by the present invention is not substantially larger than that from the existing Tichy algorithm. The calculation complexity which applying the differences is almost identical to a typical Tichy algorithm and is still linear. The time taken to apply the differences in the normal direction is the same as for the existing Tichy algorithm. Reversal is a linear operation, taking approximately twice as long as the normal direction.

Accordingly, the difference data generation method of the present invention enables reversible switching between file versions or configurations with negligible increase in the size of the data needed and the efficiency of the switching operation in the normal direction when compared with current irreversible systems.

## Claims

1. A method of generating a first difference data group from a first data group and a second data group, the first difference data group generating, in a programmable device, the second data group when applied to the first data group and the first data group when applied to the second data group, the method comprising the steps of:
comparing the second data group with the first data group to generate a first difference data subgroup comprising first difference data items and a remainder data group;
comparing the remainder data group with the second data group to generate a second difference data subgroup comprising second difference data items;
comparing at least some of the second difference data items with at least some of the first difference data items to generate a third difference data subgroup comprising third difference data items, wherein at least some of the third difference data items comprise a combination of a first difference data item and a second difference data item and the first and second difference data items comprised in third difference data items are removed from the first and second difference data subgroups respectively to form reduced first and second difference data subgroups, the reduced first difference data subgroup and the third difference data subgroup together defining a first source-to-target difference data group and the reduced second difference group defining a first target-to-source difference data group;
outputting the first source-to-target difference data group and the first target-to-source difference data group to define the first difference data group.

2. A method according to claim 1, wherein the first and second difference data items comprise copy instructions and add instructions.

3. A method according to claim 1 or claim 2, wherein at least some of the third difference data items comprise exclusive-or instructions.

4. A method according to any preceding claim, wherein the step of comparing at least some of the second difference data items with at least some of the first difference data items to generate a third difference data subgroup comprises matching up add instructions from the second difference data subgroup with add instructions from the first difference data subgroup to produce exclusive-or instructions defining third difference data items to replace the add instructions from which the exclusive-or instructions were produced.

5. A method according to claim 4, wherein the step of comparing at least some of the second difference data items with at least some of the first difference data items to generate a third difference data subgroup further comprises comparing unmatched add instructions from the second difference data subgroup pass with copy instructions from the first difference data subgroup and copy instructions from the second difference data subgroup pass with unmatched add instructions from the first difference data subgroup and matching up unmatched add instructions with copy instructions to produce further exclusive-or instructions defining third difference data items to replace the add and copy instructions from which the exclusive-or instructions were produced.

6. A method according to any preceding claim, wherein the first data group is a current version of a file or data set and the second data group is a new version of a file or data set.

7. A method according to claim 6, wherein the file or data set comprises operating instructions, an operating programme or an operating system.

8. A method according to any of claims 1 to 6, wherein the first data group is a first configuration and the second data group is a second configuration.

9. A method of generating a second data group from a first data group in a programmable device, the method comprising the steps of:
inputting a source-to-target data group or a first difference data group generated according to any preceding claim;
applying the source-to-target data group or first difference data group to the first data group to generate the second data group; and
outputting the second data group.

10. A method of generating a first data group from a second data group in a programmable device, the method comprising the steps of:
inputting a first difference data group generated according to any of claims 1 to 8;
applying the first difference data group to the second data group to generate the first data group; and
outputting the first data group.

11. A method according to claim 10, wherein the inputting step comprises separately inputting the source-to-target difference data group and the target-to-source difference data group comprising the first difference data group.

12. A method according to any of claims 1 to 8, further comprising the step of applying the source-to-target difference data group or the first difference data group to the first data group to generate the second data group.

13. A method according to any of claims 1 to 8 or claim 12, further comprising the step of applying the first difference data group to the second data group to produce the first data group.

14. A method according to claim 13, wherein in the target-to-source difference data group and source-to-target difference data group comprising the first difference data group are delivered separately to the first and second data groups.

15. A method according to any preceding claim, further comprising the step of alternating the steps of producing the second data group from the first data group and the step of producing the first data group from the second group to alternate between the first and second data groups.

16. A method according to any preceding claim, further comprising the step of applying a second source-to target group or a second difference data group, generated from the second data group and a third data group, to the second data group to produce the third data group or to the third data group to produce the second data group.

17. A method according to claim 15, further comprising the step of applying a third source-to-target group or a third difference data group, generated from the third data group and the first data group, to the third data group to produce the first data group or to the first data group to produce the third data group.

18. A method according to claim 15 or claim 16, further comprising the steps of applying each of n source-to-target or difference data groups to one of the pair of data groups from which the difference data group was generated to switch between n data groups.

19. A method according to any of claims 15 to 17, wherein the first, second, third, fourth, nth data groups are first, second, third, fourth, nth file versions respectively.

20. A method according to any preceding claim, wherein the method steps are comprised by computer program instructions held by a programmable system.

21. A difference data generating system for generating a first difference data group from a first data group and a second data group, the first difference data group generating, in a programmable device, in a programmable device, the second data group when applied to the first data group and the first data group when applied to the second data group, the system comprising:
a first difference data generator arranged to compare, in use, a second data group with the first data group to generate a first difference data subgroup comprising first difference data items and a remainder data group;
a second difference data generator arranged to compare, in use, the remainder data group with the second data group to generate a second difference data subgroup comprising second difference data items;
a difference data combiner arranged to compare, in use, at least some of the second difference data items with at least some of the first difference data items to generate a third difference data subgroup comprising third difference data items, wherein at least some of the third difference data items comprise a combination of a first difference data item and a second difference data item;
means for removing the first and second difference data items comprised in third difference data items from the first and second difference data subgroups respectively to form reduced first and second difference data subgroups, the reduced first difference data subgroup and the third difference data subgroup together defining a first source-to-target difference data group and the reduced second difference group defining a first target-to-source difference data group;
output means arranged to output, in use, the first source-to-target difference data group and the first target-to-source difference data group to define the first difference data group.

22. A system according to claim 21, wherein the first and second difference data items comprise copy instructions and add instructions.

23. A system according to claim 21 or 22, wherein at least the third difference data items comprise exclusive-or instructions.

24. A system according to any of claims 21 to 23, wherein the first data group is a current version of a file or data set and the second data group is a new version of a file or data set.

25. A system according to claim 24, wherein the file or data set comprises operating instructions, an operating programme or an operating system.

26. A system according to any of claims 21 to 23, where in the first data group is a first configuration and the second data group is a second configuration.

27. A programmable device comprising:
input means arranged to input, in use, a first difference data group or a source-to target difference data group generated according to any of claims 21 to 26;
means for applying the first difference data group or the source-to-target difference data group to the first data group to generate the second data group; and
output means arranged to output, in use, the second data group.

28. A programme device comprising:
input means arranged to input, in use, a first difference data group generated according to any of claims 21 to 26;
means for applying the first difference data group to the second data group to generate the first data group; and
output means arranged to output, in use, the first data group.

29. A device according to claim 28, wherein the input means comprises separate means for inputting the source-to-target difference data group and the target-to-source difference data group comprising the difference data group.

30. A device according to any of claims 27 to 29, wherein the system is comprised by a software updating means.

31. A programmable system comprising a first programmable device according to claim 27 and a second programmable device according to claim 28.

32. A device according to claim 30, wherein the system is comprised by a means for switching between multiple configurations.

33. A device or system according to any of claims 27 to 34, wherein the output means comprises a broadcast type interface, a wired communication interface or an information reproducing medium.

34. A device or system according to any of claims 27 to 34, wherein the output means comprises a hard disc or flash memory.

35. A device or system according to any of claims 27 to 33, wherein the means for applying the first difference data group comprises a processor.
